# EUROPEAN PATENT SPECIFICATION

(11) **EP 2 107 930 B1**
(45) Date of publication and mention of the grant of the patent: **18.04.2012**
(21) Application number: 08708100.6
(22) Date of filing: 23.01.2008
(51) Int. Cl.: B01D 53/14

(54) **PROCESS FOR REDUCING CARBON DIOXIDE EMISSION IN A POWER PLANT**
VERFAHREN ZUR VERRINGERUNG DER KOHLENDIOXIDEMISSION IN EINEM KRAFTWERK
PROCÉDÉ POUR LIMITER LES ÉMISSIONS DE DIOXYDE DE CARBONE DANS UNE CENTRALE ÉLECTRIQUE

(30) Priority: 25.01.2007 EP 07101148
(43) Date of publication of application: 14.10.2009
(73) Proprietor: Shell Internationale Research Maatschappij B.V., 2596 HR The Hague (NL)
(72) Inventor: LI, Kuei-Jung, San Francisco, CA 94131 (US); PROTOPAPAS, Georgios, NL-1031 CM Amsterdam (NL)
(74) Representative: Matthezing, Robert Maarten
(86) International application number: PCT/EP2008/050735
(87) International publication number: WO 2008/090168

(56) References cited:
- WO-A-00/48709
- GB-A- 2 140 873

## Description

The invention relates to a process for reducing carbon dioxide (CO₂) emission in a power plant.

A substantial portion of the world's energy supply is provided by combustion of fuels, especially natural gas or synthesis gas, in a power plant. Generally the fuel is combusted in one or more gas turbines and the resulting gas is used to produce steam. The steam is then used to generate power. Combustion of fuel results in the production of CO₂. During the last decades there has been a substantial global increase in the amount of CO₂ emission to the atmosphere. Following the Kyoto agreement, CO₂ emission has to be reduced in order to prevent or counteract unwanted changes in climate.

The CO₂ concentration of a gas turbine flue gas depends on the fuel and the combustion and heat recovery process applied and is generally relatively low, typically in the range of 3-15%. Thus, a reduction in the emission of CO₂ makes it desirable to separate the CO₂ from the exhaust gas because it will be too expensive to compress and deposit the whole flue gas stream. For this reason, it is advantageous to use a dedicated CO₂ capture unit, to remove CO₂ from the flue gas stream and thereby generate a concentrated CO₂ stream.

Such a process is described for example in EP 1,688,173, wherein a process for carbon dioxide recovery and power generation on an off-shore platform is described using a CO₂ capture unit with an absorber and a regenerator. Exhaust gas containing CO₂ is pressurised using a blower prior to entering the absorber. The need for this blower adds to the overall cost and operational complexity of the process.

GB 2 140 873 A describes a closed-cycle gas turbine chemical processor comprising a CO₂ recovery system to which exhaust gases from the turbine are supplied at a pressure of about 160 psia (11.0 bara) via a heat exchanger. The unabsorbed gases leave the CO₂ recovery system at a pressure of about 156 psia (10.8 bara).

It has now been found that a more simplified process can be achieved when a pressurised exhaust gas containing CO₂ is produced.

To this end, the invention provides a process for reducing CO₂ emission in a power plant, wherein the power plant comprises at least one gas turbine coupled to a heat recovery steam generator unit and a CO₂ capture unit comprising an absorber and a regenerator, the process comprising the steps of: (a) introducing hot exhaust gas exiting a gas turbine having a certain elevated pressure into a heat recovery steam generator unit to produce steam and a flue gas stream comprising carbon dioxide; (b) removing carbon dioxide from the flue gas stream comprising carbon dioxide by contacting the flue gas stream with absorbing liquid in an absorber having an elevated operating pressure to obtain absorbing liquid enriched in carbon dioxide and a purified flue gas stream, wherein the settings of the gas turbine are adjusted such that the hot exhaust gas exiting the gas turbine has a pressure of at least 40% of the elevated operating gauge pressure of the absorber; characterised in that the elevated operating pressure in the absorber is in the range of from 50 to 200 mbarg.

In the process, a power plant comprising at least one gas turbine is used. Typically, fuel and an oxygen- containing gas are introduced into a combustion section of the gas turbine. In the combustion section of the gas turbine, the fuel is combusted to generate a hot combustion gas. The hot combustion gas is expanded in the gas turbine, usually via a sequence of expander blades arranged in rows, and used to generate power via a generator. Suitable fuels to be combusted in the gas turbine include natural gas and synthesis gas.

In step (a), hot exhaust gas exiting the gas turbine is introduced into a heat recovery steam generator unit. The hot exhaust gas exiting the gas turbine has a certain elevated pressure. The pressure of the hot exhaust gas is determined by the settings and/or construction of the gas turbine. For example, usually the gas turbine comprises a sequence of expander blades arranged in rows: by changing the number of expander blade rows, the back pressure of the gas turbine can be increased, resulting in a hot exhaust gas having an elevated pressure. In the process, the settings and/or construction of the gas turbine are adjusted such, that the hot exhaust gas exiting the gas turbine has a pressure of at least 40% of the operating pressure of the absorber in the CO₂ capture unit. Preferably, the hot exhaust gas exiting the gas turbine has a pressure of at least 50%, more preferably at least 60%, still more preferably at least 70% of the elevated operating pressure of the absorber.

One of the factors that determine the power output of the gas turbine is the pressure difference between the inlet and the outlet of the gas turbine. Without wishing to be bound by a specific theory, it is assumed that a more substantial pressure difference will result in a higher power output. A more substantial pressure difference would normally mean that the inlet pressure of the gas turbine will be high and the outlet pressure will be as close to ambient as possible. In the process, the settings and/or construction of the gas turbine are adjusted such that the outlet pressure is purposely elevated, meaning that the outlet pressure is above ambient pressure. As a result, the power output of the gas turbine will be slightly less compared to a gas turbine having an outlet pressure close to ambient pressure. It has been found that in spite of a slightly lower power output of the gas turbine, the overall process is still more favourable because the energy requirements for the CO₂ capture unit are significantly less. The flue gas now needs little or no pressurising prior to entering the absorber of the CO₂ capture unit. Thus, expensive and energy consuming equipment normally needed for the pressurisation of the flue gas stream prior to entering the CO₂ absorber can now be dispensed with.

Preferably, the hot exhaust gas has a temperature in the range of from 350 to 700 °C, more preferably from 400 to 650 °C. The composition of the hot exhaust gas can vary, depending on the fuel gas combusted in the gas turbine and on the conditions in the gas turbine. Generally, the hot exhaust gas comprises in the range of from 10 to 15 % of O₂. Generally, the hot exhaust gas comprises in the range of from 3 to 6 % of CO₂.

The heat recovery steam generator unit is any unit providing means for recovering heat from the hot exhaust gas and converting this heat to steam. For example, the heat recovery steam generator unit can comprise a plurality of tubes mounted stackwise. Water is pumped and circulated trough the tubes and can be held under high pressure at high temperatures. The hot exhaust gas heats up the tubes and is used to produce steam. The heat recovery steam generator unit can be designed to produce one, two or three types of steam: high-pressure steam, intermediate pressure steam and low-pressure steam.

Preferably, the steam generator is designed to produce at least a certain amount of high-pressure steam, because high-pressure steam can be used to generate power. Suitably, high-pressure steam has a pressure in the range of from 90 to 150 bara, preferably from 90 to 125 bara, more preferably from 100 to 115 bara. Suitably, low-pressure steam is also produced, the low-pressure steam preferably having a pressure in the range of from 2 to 10 bara, more preferably from to 8 bara, still more preferably from 4 to 6 bara. This low-pressure steam is used for the regeneration of the absorbing liquid comprising CO₂.

In a preferred embodiment, an amount of fuel is combusted in the heat recovery steam generation unit to produce additional steam. This embodiment offers the possibility of controlling the amount and type of steam produced in the heat recovery steam generator unit, by adjusting the amount of fuel added to the heat recovery steam generator unit. Preferably, low pressure steam piping is used to deliver the heating steam from the heat recovery steam generator to the CO₂ capture unit. Suitably, the low pressure steam piping is arranged in a closed loop to segregate the steam produced which is used for power production from steam used in process heat exchangers.

The heat recovery steam generator unit emits a flue gas comprising CO₂. The composition of the flue gas depends among others on the type of fuel used in the gas turbine. Suitably, the flue gas comprises in the range of from 0.25 to 30 % (v/v) of CO₂, preferably from 1 to 20 % (v/v). The flue gas usually also comprises oxygen, preferably in the range of from 0.25 to 20 % (v/v), more preferably from 5 to 15% (v/v), still more preferably from 1 to 10 % (v/v).

In step (b), CO₂ is removed by contacting the flue gas with an absorbing liquid at elevated pressure, suitably in an absorber. Suitably, absorption takes place at relatively low temperature and at elevated operating pressure. Elevated pressure means that the operating pressure of the CO₂ absorber is above ambient pressure. Preferably, the operating pressure of the absorber is in the range of from 70 to 150 mbarg. As the flue gas already has an elevated pressure, the pressure difference between the flue gas pressure and the operating pressure of the absorber is relatively small. Thus, the flue gas does not need to be pressurised or needs to be pressurised to a lesser extent prior to entering the absorber. Given the large volume of flue gas to be pressurised, the use of a smaller blower or elimination of the need for a blower altogether will result in a considerable cost-saving for the overall process. As the temperature of the flue gas will typically be relatively high, preferably the flue gas is cooled prior to entering the absorber.

The absorbing liquid may be any absorbing liquid capable of removing CO₂ from a flue gas stream, which flue gas stream comprises oxygen and has a relatively low concentration of CO₂. Such absorbing liquids may include chemical and physical solvents or combinations of these.

Suitable physical solvents include dimethylether compounds of polyethylene glycol.

Suitable chemical solvents include ammonia and amine compounds.

In one embodiment, the absorbing liquid comprises one or more amines selected from the group of monethanolamine (MEA), diethanolamine (DEA), diglycolamine (DGA), methyldiethanolamine (MDEA) and triethanolamine (TEA). sMEA is an especially preferred amine, due to its ability to absorb a relatively high percentage of CO₂ (volume CO₂ per volume MEA). Thus, an absorbing liquid comprising MEA is suitable to remove CO₂ from flue gases having low concentrations of CO₂, typically 3-10 volume % CO₂.

In another embodiment, the absorbing liquid comprises one or more amines selected from the group of methyldiethanolamine (MDEA), triethanolamine (TEA), N,N'-di(hydroxyalkyl)piperazine, N,N,N',N'-tetrakis(hydroxyalkyl)-1,6-hexanediamine and tertiary alkylamine sulfonic acid compounds.

Preferably, the N,N'-di(hydroxyalkyl)piperazine is N,N'-d-(2-hydroxyethyl)piperazine and/or N,N'-di-(3-hydroxypropyl)piperazine.

Preferably, the tetrakis(hydroxyalkyl)-1,6-hexanediamine is N,N,N',N'-tetrakis(2-hydroxyethyl)-1,6-hexanediamine and/or N,N,N',N'-tetrakis(2-hydroxypropyl)-1,6-hexanediamine.

Preferably, the tertiary alkylamine sulfonic compounds are selected from the group of 4-(2-hydroxyethyl)-1-piperazineethanesulfonic acid, 4-(2-hydroxyethyl)-1-piperazinepropanesulfonic acid, 4-(2-hydroxyethyl)piperazine-1-(2-hydroxypropanesulfonic acid) and 1,4-piperazinedi(sulfonic acid).

In yet another embodiment, the absorbing liquid comprises N-ethyldiethanolamine (EDEA).

In an especially preferred embodiment, the absorbing liquid comprises ammonia.

In the event that the flue gas stream comprises an appreciable quantity of oxygen, suitably in the range of from 1 to 20 % (v/v) of oxygen, preferably a corrosion inhibitor is added to the absorbing liquid. Suitable corrosion inhibitors are described for example in US 6, 036, 888.

In most cases it will be desirable to have a continuous process, including regeneration of the absorbing liquid. Thus, preferably the process further comprises a step (c) of regenerating the absorbing liquid enriched in carbon dioxide by contacting the absorbing liquid enriched in carbon dioxide with a stripping gas at elevated temperature in a regenerator to obtain regenerated absorbing liquid and a gas stream enriched in carbon dioxide. It will be understood that the conditions used for regeneration depend inter alia on the type of absorbing liquid and on the conditions used in the absorption step. Suitably, regeneration takes place at a different temperature and/or different pressure than the absorption.

In the event that the absorbing liquid comprises an amine, preferred regeneration temperatures are in the range of from 100 to 200 °C. In the event that the absorbing liquid comprises an aqueous amine, regeneration preferably takes place at pressure in the range of from 1 to 5 bara.

In the event that the absorbing liquid comprises ammonia, suitably the absorbing step is performed at temperatures below ambient temperature, preferably in the range of from 0 to 10 °C, more preferably from 2 to 8 °C. The regeneration step is suitably performed at temperatures higher than used in the absorption step. When using an absorbing liquid comprising ammonia, the CO₂-enriched gas stream exiting the regenerator has a elevated pressure. Suitably, the pressure of the CO₂-enriched gas stream is in the range of from 5 to 8 bara, preferably from 6 to 8 bara. In applications where the CO₂-enriched gas stream needs to be at a high pressure, for example when it will be used for injection into a subterranean formation, it is an advantage that the CO₂-enriched gas stream is already at an elevated pressure. Normally, a series of compressors is needed to pressurise the CO₂-enriched gas stream to the desired high pressures. A CO₂-enriched gas stream which is already at elevated pressure is easier to further pressurise.

Optionally, the process further comprises a step (d) of combusting an amount of fuel in the heat recovery steam generation unit to produce additional steam. Preferably, the heat requirements of the regeneration step are at least partly fulfilled using the additional amount of steam. The amount of fuel combusted is preferably such that the additional amount of steam is sufficient to provide at least 80%, more preferably at least 90%, still more preferably at least 95%, and most preferably 100% of the heat needed for the regeneration of the absorbing liquid.

A preferred way of performing of step (d) is to monitor the power generated by the heat recovery steam generator unit and adjust the amount of fuel introduced into the heat recovery steam generator unit in dependence of the amount of power. As explained earlier, in the heat recovery steam generator unit preferably high pressure steam is produced in a steam turbine, which high pressure steam is converted to power, for example via a generator coupled to the steam turbine. The power output of the generator coupled to the steam turbine will decrease when the CO₂ capture unit is in operation, due to the amount of steam extracted from the heat recovery steam generator unit needed to heat up the regenerator of the CO₂ capture unit. By monitoring the output of generator coupled to the steam turbine of the heat recovery generator unit, the amount of fuel combusted in the heat recovery steam generator unit can be adjusted. In the event that the output decreases, the amount of fuel combusted can be increased. Preferably, the amount of fuel to be combusted in order to enable fulfilling the heat requirements of the regenerator of the CO₂ capture unit without significantly diminishing the power output of the generator coupled to the steam turbine is predetermined. The power output of the generator coupled to the steam turbine when the CO₂ capture unit is not in operation is taken as a base case and the amount of fuel to be combusted in order to achieve the same output is then determined.

Suitable fuels to be combusted in the heat recovery steam generator unit include natural gas and synthesis gas.

Combustion of the amount of fuel in step (d) requires the presence of oxygen. This oxygen can be supplied to the heat recovery steam generator unit, but preferably the hot exhaust gas comprises oxygen and at least part of this oxygen is used in the combustion of the fuel in step (d). As a result of using oxygen from the hot exhaust gas, the amount of oxygen in the flue gas exiting the heat recovery steam generator unit will be lower. This is favourable for the CO₂ absorption process, especially when an amine absorbing liquid is used. Oxygen can cause amine degradation and can lead to the formation of degradation products in the absorbing liquid. A lower oxygen content of the flue gas will therefore result in less amine degradation and less formation of degradation products.

Preferably, the gas stream enriched in carbon dioxide is pressurised using a carbon dioxide compressor to produce a pressurised carbon dioxide stream. The carbon dioxide compressor needs to be driven. An elegant heat integration is achieved when part of the steam produced in the heat recovery steam generator unit is used to drive the carbon dioxide compressor.

Preferably, the pressurised CO₂ stream has a pressure in the range of from 40 to 300 bara, more preferably from 50 to 300 bara. A CO₂ stream having a pressure in these preferred ranges can be used for many purposes, in particular for enhanced recovery of oil, coal bed methane or for sequestration in a subterranean formation. Especially for purposes wherein the pressurised CO₂ stream is injected into a subterranean formation, high pressures are required. In a preferred embodiment, the pressurised CO₂ stream is used for enhanced oil recovery. By injecting CO₂ into an oil reservoir, the oil recovery rate can be increased. Typically, the pressurised CO₂ stream is injected into the oil reservoir, where it will be mixed with some of the oil which is present. The mixture of CO₂ and oil will displace oil which cannot be displaced by traditional injections.

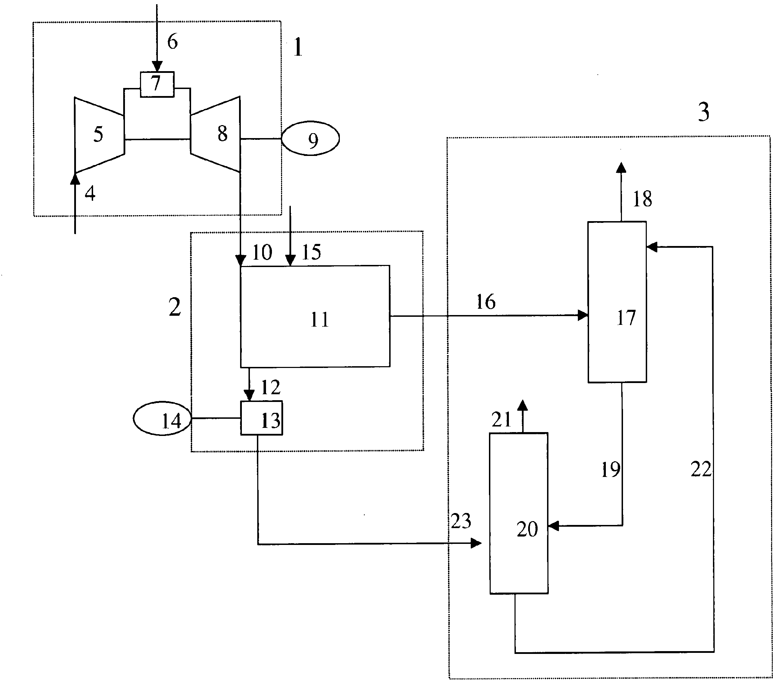

The invention will now be illustrated, by means of example only, with reference to the accompanying figure 1.

In figure 1, a power plant comprising a gas turbine (1), a heat recovery steam generator unit (2) and a CO₂ capture unit (3) is shown. In the gas turbine, an oxygen-containing gas is supplied via line 4 to compressor 5. Fuel is supplied via line 6 to combustor 7 and combusted in the presence of the compressed oxygen-containing gas. The resulting combustion gas is expanded in expander 8 and used to generate power in generator 9. Remaining exhaust gas comprising CO₂ and oxygen is led via line 10 to a heat recovery steam generator unit 2. In the heat recovery steam generator unit, water is heated against the hot exhaust gas in heating section 11 to generate steam. The steam is led via line 12 into a steam turbine 13 to produce additional power in generator 14. Optionally, an amount of fuel is led via line 15 to the heat recovery steam generator unit and combusted, using oxygen from the exhaust gas, to produce additional steam. Hot flue gas comprising CO₂ and oxygen and having an increased pressure is led via line 16 to an amine absorber 17. Preferably, the hot flue gas is first cooled in a cooler (not shown). In amine absorber 17, CO₂ is transferred at from the flue gas to the amine liquid contained in the amine absorber. Purified flue gas, depleted in carbon dioxide, is led from the amine absorber via line 18. Amine liquid, enriched in CO₂ is led from the amine absorber via line 19 to a regenerator 20. In the regenerator, amine liquid enriched in CO₂ is depressurised and contacted with a stripping gas at elevated temperature, thereby transferring CO₂ from the amine liquid to the stripping gas to obtain regenerated amine liquid and a gas stream enriched in CO₂. The gas stream enriched in CO₂ is led from the regenerator via line 21. Preferably, the gas stream enriched in CO₂ is pressurised using a CO₂ compressor (not shown) and the pressurised CO₂ stream is used elsewhere. Regenerated amine liquid is led from the regenerator via line 22 to the amine absorber. The heat needed to provide the elevated temperature of the regenerator is supplied using low pressure steam, which is led from steam turbine 13 via line 23 to the regenerator.

## Claims

1. A process for reducing CO₂ emission in a power plant, wherein the power plant comprises at least one gas turbine coupled to a heat recovery steam generator unit and a CO₂ capture unit comprising an absorber and a regenerator, the process comprising the steps of:
(a) introducing hot exhaust gas exiting a gas turbine having a certain elevated pressure into a heat recovery steam generator unit to produce steam and a flue gas stream comprising carbon dioxide;
(b) removing carbon dioxide from the flue gas stream comprising carbon dioxide by contacting the flue gas stream with absorbing liquid in an absorber having an elevated operating pressure to obtain absorbing liquid enriched in carbon dioxide and a purified flue gas stream, wherein the settings and/or construction of the gas turbine are adjusted such that the hot exhaust gas exiting the gas turbine has a pressure of at least 40% of the elevated operating gauge pressure of the absorber;
**characterised in that** the elevated operating pressure in the absorber is in the range of from 50 to 200 mbarg.

2. A process according to claim 1, wherein the hot exhaust gas exiting the gas turbine has a pressure of at least 50%, preferably at least 60%, more preferably at least 70% of the elevated operating gauge pressure of the absorber.

3. A process according to claim 1 or 2, wherein the elevated operating pressure of the absorber is in the range of from 70 to 150 mbarg.

4. A process according to any one of claims 1 to 3, further comprising the step of:
(c) regenerating the absorbing liquid enriched in carbon dioxide by contacting the absorbing liquid enriched in carbon dioxide with a stripping gas at elevated temperature in a regenerator to obtain regenerated absorbing liquid and a gas stream enriched in carbon dioxide.

5. A process according to any one of claims 1 to 4, the process further comprising the step of:
(d) pressurising the gas stream enriched in carbon dioxide using a carbon dioxide compressor, wherein preferably a first part of the steam produced in the heat recovery steam generator unit is used to drive the carbon dioxide compressor.

6. A process according to any of the preceding claims, wherein an amount of fuel is combusted in the heat recovery steam generator unit to produce an additional amount of steam, wherein preferably the amount of fuel combusted in the heat recovery steam generator unit is such that the additional amount of steam is sufficient to provide at least 80% of the heat needed for the regeneration of the absorbing liquid.

7. A process according to any one of the preceding claims, wherein at least part of the steam produced in the heat recovery steam generator unit is high pressure steam, preferably having a pressure in the range of from 90 to 125 bara, more preferably from 100 to 115 bara.

8. A process according to any one of the claims 5 to 7, wherein the pressurised gas stream enriched in carbon dioxide is used for enhanced oil recovery.

9. A process according to any one of the preceding claims, wherein the absorbing liquid comprises an amine, preferably one or more amines selected from the group of monethanolamine (MEA), diethanolamine (DEA), diglycolamine (DGA), methyldiethanolamine (MDEA), triethanolamine (TEA), N-ethyldiethanolamine (EDEA), N, N'-di (hydroxyalkyl) piperazine, N, N, N ' , N'-tetrakis (hydroxyalkyl) -1, 6-hexanediamine and tertiary alkylamine sulfonic acid compounds.

10. A process according to any one of claims 1 to 8, wherein the absorbing liquid comprises a physical solvent or ammonia.

## Patentansprüche

1. Verfahren zur Reduzierung des CO₂-Ausstoßes in einem Kraftwerk, wobei das Kraftwerk zumindest eine Gasturbine umfasst, die mit einer Abhitzedampferzeugereinheit und einer CO₂-Auffangeinheit, umfassend einen Absorber und einen Regenerator, gekoppelt ist, wobei das Verfahren die folgenden Schritte umfasst:
(a) Einleitung von heißem Abgas das eine Gasturbine anregt, mit einem Druck bestimmter Höhe in eine Abhitzedampferzeugereinheit zur Erzeugung von Dampf und eines Abgasstroms, der Kohlendioxid enthält;
(b) Entfernen des Kohlendioxids aus dem Abgasstrom, der Kohlendioxid enthält, durch Inkontaktbringen des Abgasstroms mit Absorptionsflüssigkeit in einem Absorber, der einen hohen Betriebsdruck aufweist, zur Gewinnung einer kohlendioxidangereicherten Absorptionsflüssigkeit und eines gereinigten Abgasstroms, wobei die Einstellparameter und/oder der Aufbau der Gasturbine so angepasst sind, dass das heiße Abgas, das aus der Gasturbine austritt, einen Druck von mindestens 40% der Höhe des Betriebsüberdrucks des Absorbers aufweist, **dadurch gekennzeichnet, dass** die Höhe des Betriebsdrucks in dem Absorber in einem Bereich von 50 bis 200 mbarg (engl.: "mbarg") liegt.

2. Verfahren nach Anspruch 1, wobei das heiße Abgas zur Anregung der Gasturbine einen Druck von mindestens 50%, vorzugsweise mindestens 60%, besonders bevorzugt mindestens 70% der Höhe des Betriebsüberdrucks des Absorbers aufweist.

3. Verfahren nach Anspruch 1 oder 3, wobei die Höhe des Betriebsdrucks des Absorbers in einem Bereich von 70 bis 150 mbarg liegt.

4. Verfahren nach einem der Ansprüche 1 bis 3, ferner umfassend die folgenden Schritte:
(c) Regeneration der kohlendioxidangereicherten Absorptionsflüssigkeit durch Inkontaktbringen der kohlendioxidangereicherten Absorptionsflüssigkeit mit einem Strippgas bei erhöhter Temperatur in einem Regenerator zur Gewinnung einer regenerierten Absorptionsflüssigkeit und eines kohlendioxidangereicherten Gasstroms.

5. Verfahren nach einem der Ansprüche 1 bis 4, wobei das Verfahren zudem die folgenden Schritte umfasst:
(d) Druckbeaufschlagung des kohlendioxidangereicherten Gasstroms unter Verwendung eines Kohlendioxidverdichters, wobei vorzugsweise ein erster Teil des Stroms, der in der Abhitzedampferzeugereinheit erzeugt wird, zum Antrieb des Kohlendioxidverdichters verwendet wird.

6. Verfahren nach einem der vorangehenden Ansprüche, wobei eine Menge von Brennstoff in der Abhitzedampferzeugereinheit verbrannt wird, um eine zusätzliche Menge an Dampf zu erzeugen, wobei vorzugsweise die Menge des in der Abhitzedampferzeugereinheit verbrannten Brennstoffs so hoch ist, dass die zusätzliche Menge an Dampf zur Bereitstellung von mindestens 80% der Wärme, die zur Regeneration der Absorptionsflüssigkeit erforderlich ist, ausreicht.

7. Verfahren nach einem der vorangehenden Ansprüche, wobei zumindest ein Teil des Dampfes, der in der Abhitzedampferzeugereinheit erzeugt wird, Hochdruckdampf, vorzugsweise mit einem Druck in einem Bereich von 90 bis 125 bara (engl.: "bara"), besonders bevorzugt zwischen 100 und 115 bara, ist.

8. Verfahren nach einem der Ansprüche 5 bis 7, wobei der druckbeaufschlagte kohlendioxidangereicherte Gasstrom für eine verbesserte Ölrückgewinnung verwendet wird.

9. Verfahren nach einem der vorangehenden Ansprüche, wobei die Absorptionsflüssigkeit ein Amin, vorzugweise ein oder mehrere Amine, enthält, die aus der Gruppe, umfassend Monethanolamin (MEA), Diethanolamin (DEA), Diglykolamin (DGA), Methyldiethanolamin (MDEA), Triethanolamin (TEA), N-Ethyldiethanolamin (EDEA), N,N'-Di-hydroxyalkyl-piperazin, N, N, N ', N'-Tetrakis hydroxyalkyl -1,6-hexandiamin und tertiäre Alkylamin-Schwefelsäureverbindungen, ausgewählt sind.

10. Verfahren nach einem der Ansprüche 1 bis 8, wobei die Absorptionsflüssigkeit ein physikalisches Lösungsmittel oder Ammoniak ist.

## Revendications

1. Procédé de réduction des émissions de CO₂ dans une centrale électrique, dans lequel la centrale électrique comprend au moins une turbine à gaz couplée à une unité de générateur de vapeur à récupération de chaleur et une unité de capture de CO₂ comprenant un absorbeur et un régénérateur, le procédé comprenant les étapes consistant à :
(a) introduire un gaz d'échappement chaud sortant d'une turbine à gaz ayant une certaine pression élevée dans une unité de générateur de vapeur à récupération de chaleur pour produire de la vapeur et un courant de gaz de combustion comprenant du dioxyde de carbone ;
(b) éliminer le dioxyde de carbone du courant de gaz de combustion comprenant du dioxyde de carbone en mettant en contact le courant de gaz de combustion avec un liquide absorbant dans un absorbeur ayant une pression de service élevée pour obtenir un liquide absorbant enrichi en dioxyde de carbone et un courant de gaz de combustion purifié, dans lequel les réglages et/ou la construction de la turbine à gaz sont ajustés de telle sorte que le gaz d'échappement chaud sortant de la turbine à gaz ait une pression d'au moins 40 % de la pression effective de service élevée de l'absorbeur ;
**caractérisé en ce que** la pression de service élevée de l'absorbeur est dans la plage de 50 à 200 mbarg.

2. Procédé selon la revendication 1, dans lequel le gaz d'échappement chaud sortant de la turbine à gaz a une pression d'au moins 50 %, de préférence d'au moins 60 %, de manière davantage préférée d'au moins 70 % de la pression effective de service élevée de l'absorbeur.

3. Procédé selon la revendication 1 ou 2, dans lequel la pression de service élevée de l'absorbeur est dans la plage de 70 à 150 mbarg.

4. Procédé selon l'une quelconque des revendications 1 à 3, comprenant en outre l'étape consistant à :
(c) régénérer le liquide absorbant enrichi en dioxyde de carbone en mettant en contact le liquide absorbant enrichi en dioxyde de carbone avec un gaz d'extraction à température élevée dans un régénérateur pour obtenir du liquide absorbant régénéré et un courant de gaz enrichi en dioxyde de carbone.

5. Procédé selon l'une quelconque des revendications 1 à 4, le procédé comprenant en outre l'étape consistant à :
d) pressuriser le courant de gaz enrichi en dioxyde de carbone à l'aide d'un compresseur de dioxyde de carbone, dans lequel de préférence une première partie de courant produit dans l'unité de générateur de vapeur à récupération de chaleur est utilisée pour entraîner le compresseur de dioxyde de carbone.

6. Procédé selon l'une quelconque des revendications précédentes, dans lequel une quantité de combustible est brûlée dans l'unité de générateur de vapeur à récupération de chaleur pour produire une quantité additionnelle de vapeur, dans lequel de préférence la quantité de combustible brûlée dans l'unité de générateur de vapeur à récupération de chaleur est telle que la quantité de vapeur additionnelle est suffisante pour fournir au moins 80 % de la chaleur nécessaire pour la régénération du liquide absorbant.

7. Procédé selon l'une quelconque des revendications précédentes, dans lequel au moins une partie de la vapeur produite dans l'unité de générateur de vapeur à récupération de chaleur est de la vapeur haute pression, de préférence ayant une pression dans la plage de 90 à 125 bara, de manière davantage préférée de 100 à 115 bara.

8. Procédé selon l'une quelconque des revendications 5 à 7, dans lequel le courant de gaz pressurisé enrichi en dioxyde de carbone est utilisé pour une récupération d'huile accentuée.

9. Procédé selon l'une quelconque des revendications précédentes, dans lequel le liquide absorbant comprend une amine, de préférence une ou plusieurs amines choisies dans le groupe de la monoéthanolamine (MEA), la diéthanolamine (DEA), la diglycolamine (DGA), la méthyldiéthanolamine (MDEA), la triéthanolamine (TEA), la N-éthyldiéthanolamine (EDEA), une N,N'-di(hydroxyalkyl)pipérazine, une N,N,N',N'-tétrakis(hydroxyalkyl)-1,6-hexanediamine et des composés acide alkylamine sulfonique tertiaire.

10. Procédé selon l'une quelconque des revendications 1 à 8, dans lequel le liquide absorbant comprend un solvant physique ou de l'ammoniaque.
